# EUROPEAN PATENT SPECIFICATION

(11) **EP 3 757 415 B1**
(45) Date of publication and mention of the grant of the patent: **01.03.2023**
(21) Application number: 18913184.0
(22) Date of filing: 19.11.2018
(51) Int. Cl.: F16D 25/0632, F16D 13/74

(54) **FRICTION CLUTCH**
REIBUNGSKUPPLUNG
EMBRAYAGE À FRICTION

(30) Priority: 28.03.2018 JP 2018062869
(43) Date of publication of application: 30.12.2020
(73) Proprietor: Dynax Corporation, Chitose-shi Hokkaido 066-8585 (JP)
(72) Inventor: AKIMOTO, Kenichi, Chitose-shi Hokkaido 066-8585 (JP)
(74) Representative: Tomkins & Co
(86) International application number: PCT/JP2018/042593
(87) International publication number: WO 2019/187319

(56) References cited:
- DE-A1- 19 833 397
- JP-A- 2013 130 249
- JP-A- 2016 105 017
- JP-A- 2017 180 751
- JP-U- H0 222 439
- KR-A- 20020 051 735
- US-A1- 2016 146 268

## Description

### [FIELD OF THE INVENTION]

The present invention relates to a friction clutch used for such as an automatic transmission.

### [BACKGROUND ART]

Some friction clutches for transmitting torque between a clutch drum and a hub, which are disposed on the same axis to be relatively rotatable to each other, frictionally engage a plate mounted to either the clutch drum or the hub and a friction plate mounted to the other. To further increase the transmission torque capacity in this type of friction clutch, it has been proposed to increase the hydraulic pressure for operating the piston to improve the close contact made between the plate and the friction plate, increasing the area pressed by the piston, or increasing the number of plates and friction plates.

The friction clutch is, however, also required to be downsized. Therefore, improving transmission torque capacity by increasing the size of the friction clutch as mentioned above is not desired. That is, a friction clutch which not only is compact and has a larger transmission torque capacity, but also is capable of inhibiting a drag torque is required. The following is an example of the friction clutches which have attempted to solve the above problems.

### [Prior Art Document]

### [Patent document]

[Patent Document 1] Japanese Unexamined Patent Publication No. 2017-20654

Patent Document 1 discloses a shifting device for a motor vehicle transmission combining a friction clutch, in which a plate and a friction plate frictionally engage, with a cone clutch and a dog clutch. According to the shifting device disclosed in document 1, a piston operates to frictionally engage conical surfaces of the cone clutch with each other, and to engage teeth of the dog clutch with each other. And then, the plate and the friction plate are brought into close contact with each other by the piston. With this configuration, the transmission torque capacity can be larger, and the drag torque can be inhibited.

The friction clutch is, however, also required to have a desirable response to the event of torque transmission interlocking under hydraulic control. In this regard, in the friction clutch of Patent Document 1, drag torque may occur when the hydraulic pressure is released since the cone clutch, which should release from the friction engagement, can become stuck so that the friction engagement state continues when it is intended to be released from said engagement.

Documents US 2016/146268 A1, JP 2017 180751 A and KR 2002 0051735 A provide other examples of known friction clutches.

### [SUMMARY OF INVENTION]

### [Problems to be Solved by Invention]

In view of the above-mentioned problems of the prior art, the present invention provides a friction clutch which is compact, has a larger transmission torque capacity, and inhibits a drag torque from occurring.

### [Means for Solving the Problems]

The present invention has solved the above-mentioned problems by a friction clutch (10) comprising;
a cylindrical clutch drum (12) which is rotatably provided with an inner peripheral surface spline (14);
a hub (16) which is coaxial with the clutch drum (12) and is provided on an inner peripheral side of the clutch drum (12) so as to be relatively rotatable;
a piston (18) which is provided on an inner peripheral side of the clutch drum (12) to move forward and backward in an axial direction;
a pusher plate (20) which is connected to the piston (18), fitted into the inner peripheral surface spline (14), and has a first tapered surface (21);
an end plate (22) which is fitted into the inner peripheral surface spline (14), fixed immovably in the axial direction, and has a second tapered surface (23);
an output cone (24) which is connected to the hub (16), has a third tapered surface (25) frictionally engaging the first tapered surface (21) and a fourth tapered surface (26) frictionally engaging the second tapered surface (23);
a hydraulic chamber (30) formed between the clutch drum (12) and the piston (18);
a canceller (28) which is provided on the opposite side of the hydraulic chamber (30) with respect to the piston (18) ;
a canceller chamber (34) which is formed between the piston (18) and the canceller (28);
a through hole (46) which passes through the canceller (28) in the axial direction;
a normally open type valve mechanism (40) which is arranged in the through hole (46);
characterized in that when lubricating oil is supplied to the canceller chamber (34), a valve of the valve mechanism (40) is open, and when hydraulic oil is supplied to the canceller chamber (34), the valve of the valve mechanism (40) is closed.

### [Effect of the invention]

According to the present invention, since the torque is transmitted between the clutch drum and the hub through each frictional engagement of the tapered surfaces on the pusher plate and the output cone, and on the end plate and the output cone, the transmission torque capacity of the friction clutch can be increased and the friction clutch can be comparatively compact. Further, when the friction clutch is released, the hydraulic oil is supplied to the canceller chamber to close the valve of the valve mechanism. Thus, the hydraulic oil is stored in the canceller chamber and then the piston and the pusher plate connected to the piston are pushed back by the hydraulic oil pressure. Accordingly, since the pusher plate can be separated from the output cone, drag torque can be inhibited. Since the valve of the valve mechanism is open during supply of only the lubricating oil to the canceller chamber, the lubricating oil in the canceller chamber is discharged through the valve mechanism arranged in the through hole even when the piston operates. Therefore, the engage response of the friction clutch is improved. On the other hand, the valve of the valve mechanism closes when the return hydraulic oil is supplied to the canceller chamber. Therefore, when the return hydraulic oil is supplied to the canceller chamber to release the engagement of the friction clutch, the piston is pushed back towards the hydraulic chamber. As a result, it is also possible to improve the release response of the friction clutch.

Furthermore, when the through hole is provided on the inner diameter side from the center of the radial dimension between an inner peripheral edge and an outer peripheral edge of the canceller, the centrifugal hydraulic pressure within the canceller chamber corresponding to the centrifugal hydraulic pressure generated within the hydraulic chamber can be easily generated during idling of the friction clutch.

### [BRIEF DESCRIPTION OF DRAWINGS]

FIG. 1 is a cross-sectional view taken along an axis of an upper half of a friction clutch according to a first embodiment of the present invention when the hydraulic pressure is not applied.
FIG. 2 is a cross-sectional view taken along an axis of an upper half of a friction clutch according to a second embodiment of the present invention when the hydraulic pressure is not applied.

### [DESCRIPTION OF EMBODIMENTS]

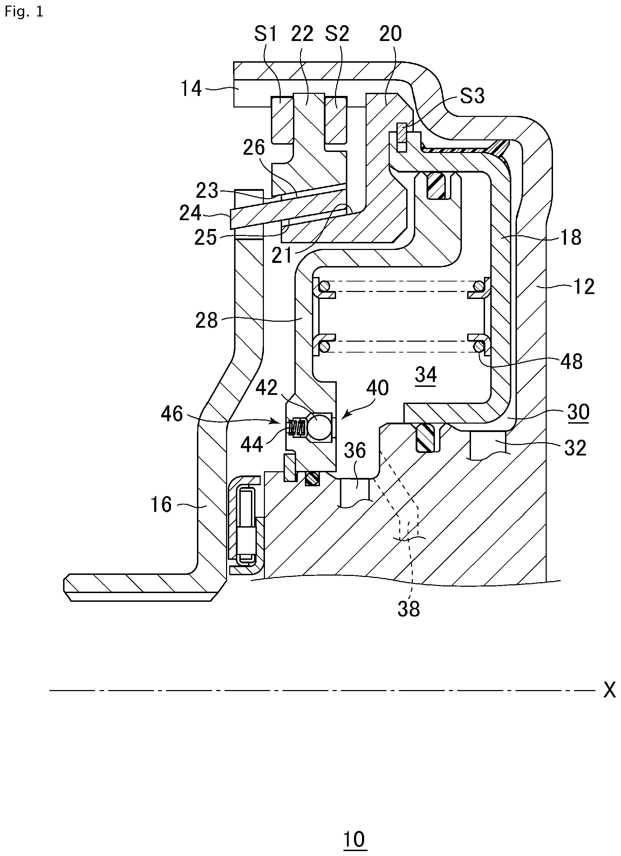

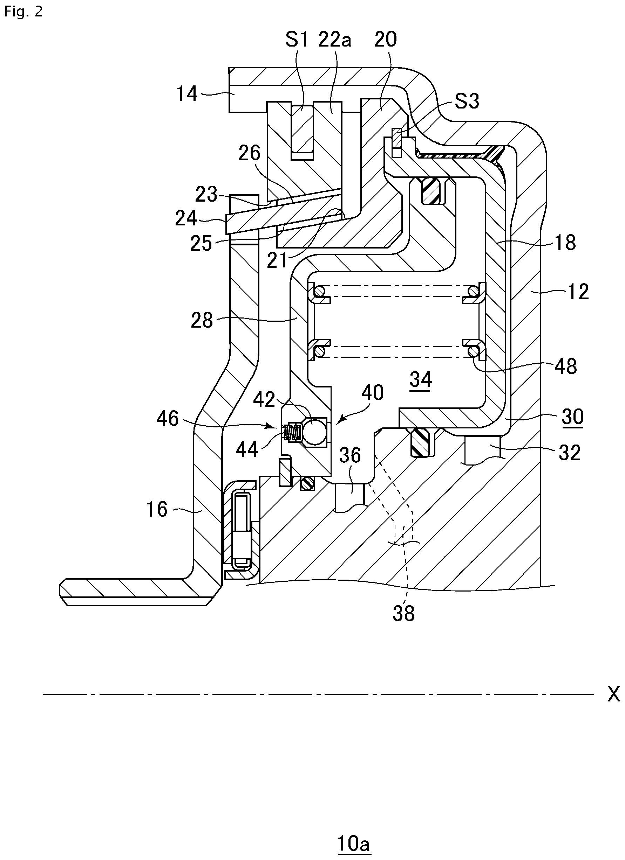

Some embodiments of the present invention will be described with reference to Figs. 1 and 2. The present invention is not, however, limited to these embodiments.

FIG. 1 shows a friction clutch 10 according to the first embodiment of the present invention when the hydraulic pressure is not applied. The friction clutch 10 is rotatable and includes a cylindrical clutch drum 12 having an inner peripheral surface spline 14 and a hub 16. The hub 16 is provided on the inner peripheral side of the clutch drum 12 so as to be coaxial with the clutch drum 12 and relatively rotatable to the clutch drum 12. Since the friction clutch 10 has a substantially symmetrical structure with respect to a drive shaft X of the clutch drum 12 and the hub 16, FIGS. 1 and 2 show the upper half of the drive shaft X.

A pusher plate 20 and an end plate 22 are fitted into the inner peripheral surface spline 14 of the clutch drum 12. The end plate 22 is fixed by a pair of snap rings S1 and S2 so as to be immovable in the axial direction. A first tapered surface 21 is formed on the pusher plate 20, and a second tapered surface 23 is formed on the end plate 22. The first tapered surface 21 and the second tapered surface 23 are not required to be formed integrally with the pusher plate 20 and the end plate 22 respectively as illustrated.

A piston 18 is provided on the inner peripheral side of the clutch drum 12. The hydraulic oil (not shown) to move the piston 18 is supplied from a hydraulic oil passage 32 to a hydraulic chamber 30 provided between the piston 18 and the clutch drum 12 to allow the piston 18 to move in the axial direction (towards the end plate 22). In addition, since the piston 18 is connected to the pusher plate 20 through a snap ring S3, when the piston 18 moves in the axial direction, the pusher plate 20 moves in the axial direction.

An output cone 24 is connected to the hub 16. The output cone 24 has a third tapered surface 25 that frictionally engages with the first tapered surface 21 of the pusher plate 20, and a fourth tapered surface 26 that frictionally engages with the second tapered surface 23 of the end plate 22. A friction material can be attached to either one of the first tapered surface 21 or the third tapered surface 25, and either one of the second tapered surface 23 or the fourth tapered surface 26.

A canceller 28 is provided on the opposite side of the hydraulic chamber 30 with respect to the piston 18. A canceller chamber 34 is formed between the canceller 28 and the piston 18. A return spring 48 is provided between the piston 18 and the canceller 28. A lubricating oil passage 38 for supplying lubricating oil to lubricate the operation of the friction clutch 10 and a return hydraulic oil passage 36 for supplying return hydraulic oil to the canceller chamber 34 to push back the piston 18 communicate with the canceller chamber 34 respectively.

The canceller 28 is provided with a through hole 46 which passes through the canceller 28 in the axial direction. A normally open type valve mechanism 40 is arranged in the through hole 46. The valve mechanism 40 of the friction clutch 10 is a ball check type valve having a ball 42 and a spring 44. However, alternative valve mechanisms can be used. The through hole 46 can be provided anywhere between the inner peripheral edge and the outer peripheral edge of the canceller 28. It is preferable, however, to provide the through hole 46 on the inner diameter side from the center of the radial dimension between the inner peripheral edge and the outer peripheral edge of the canceller 28 to generate centrifugal hydraulic pressure within the canceller chamber 34 corresponding to the centrifugal hydraulic pressure generated within the hydraulic chamber 30 during idling of the friction clutch 10.

The following describes the operation of the friction clutch 10. The lubricating oil used to lubricate the operation of the friction clutch 10 is supplied to the canceller chamber 34 of the friction clutch 10 through the lubricating oil passage 38 when the friction clutch 10 is in both the idling state and the engaging state. When only the lubricating oil is supplied to the canceller chamber 34 to lubricate the operation of the friction clutch 10, a valve of the valve mechanism 40 is opened. Accordingly, the lubricating oil is discharged to the outside of the canceller chamber 34 through the through hole 46. In other words, when the hydraulic oil to move the piston 18 is supplied to the hydraulic chamber 30 of the friction clutch 10 in the idling state, the first tapered surface 21 and the third tapered surface 25, and the second tapered surface 23 and the fourth tapered surface 26 are frictionally engaged with each other to transition the friction clutch 10 to the engaging state in which the torque is transmitted between the drum 12 and the hub 16. During transition from the idling state to the engaging state, only the lubricating oil is supplied to the canceller chamber 34 and discharged to the outside of the canceller chamber 34 through the through hole 46. As described above, since the torque is transmitted between the clutch drum 12 and the hub 16 through each frictional engagement of the tapered surfaces on the pusher plate 20 and the output cone 24, and on the end plate 22 and the output cone 24, the transmission torque capacity of the friction clutch 10 is increased. Accordingly, it is possible to make the friction clutch 10 compact as compared with for example a friction clutch using a large number of friction plates and mating plates.

On the other hand, when the engagement of the friction clutch 10 is released, the supply of the hydraulic oil to the hydraulic chamber 30 is stopped to return the hydraulic oil to the hydraulic oil passage 32 and the return hydraulic oil is supplied through the return hydraulic oil passage 36 to the canceller chamber 34. When the return hydraulic oil is supplied to the canceller chamber 34, the ball 42 of the valve mechanism 40 compresses the spring 44 and closes the through hole 46 so as to close the valve of the valve mechanism 40. When the return hydraulic oil is continuously supplied to the canceller chamber 34 with the valve of the valve mechanism 40 closed, the return hydraulic oil is stored in the canceller chamber 34 to push the piston 18 and the pusher plate 20 connected to the piston 18 back towards the hydraulic chamber 30 by the hydraulic pressure of the return hydraulic oil. Therefore, since the pusher plate 20 can be separated from the output cone 24, drag torque can be inhibited.

Since the valve of the valve mechanism 40 of the friction clutch 10 is open when only the lubricating oil is supplied to the canceller chamber 34, the lubricating oil in the canceller chamber 34 is discharged through the valve mechanism 40 arranged in the through hole 46 even when the piston 18 operates to move towards the end plate 22. Therefore, the engage response of the friction clutch 10 is improved. On the other hand, the valve of the valve mechanism 40 closes when the return hydraulic oil is supplied to the canceller chamber 34. Therefore, when the return hydraulic oil is supplied to the canceller chamber 34 to release the engagement of the friction clutch 10, the piston 18 is pushed back towards the hydraulic chamber 30. As a result, it is also possible to improve a release response of the friction clutch 10.

FIG. 2 shows a friction clutch 10a according to a second embodiment of the present invention. The same reference numbers are used for the elements which are similar to those of the friction clutch 10. An end plate 22a of the friction clutch 10a is fixed by a snap ring S1 so as to be immovable in the axial direction. In this way, the configuration of an end plate or the method for fixing an end plate can be appropriately modified. The snap ring S2 of the friction clutch 10 can be replaced with for example a radially inward protrusion, which is not shown, provided on the clutch drum 12.

As described above, according to the present invention, it is possible to provide a friction clutch which is compact, has a larger transmission torque capacity, and inhibits a drag torque from occurring.

### [EXPLANATION OF REFERENCES]

10,10a Friction clutch
12 clutch drum
14 inner peripheral surface spline
16 hub
18 piston
20 pusher plate
21 first tapered surface
22, 22a end plate
23 second tapered surface
24 output cone
25 third tapered surface
26 fourth tapered surface
28 canceller
30 hydraulic chamber
34 canceller chamber
40 valve mechanism
46 through hole

## Claims

1. A friction clutch (10) comprising;
a cylindrical clutch drum (12) which is rotatably provided with an inner peripheral surface spline (14);
a hub (16) which is coaxial with the clutch drum (12) and is provided on an inner peripheral side of the clutch drum (12) so as to be relatively rotatable;
a piston (18) which is provided on an inner peripheral side of the clutch drum (12) to move forward and backward in an axial direction;
a pusher plate (20) which is connected to the piston (18), fitted into the inner peripheral surface spline (14), and has a first tapered surface (21);
an end plate (22) which is fitted into the inner peripheral surface spline (14), fixed immovably in the axial direction, and has a second tapered surface (23);
an output cone (24) which is connected to the hub (16), has a third tapered surface (25) frictionally engaging the first tapered surface (21) and a fourth tapered surface (26) frictionally engaging the second tapered surface (23);
a hydraulic chamber (30) formed between the clutch drum (12) and the piston (18);
a canceller (28) which is provided on the opposite side of the hydraulic chamber (30) with respect to the piston (18) ;
a canceller chamber (34) which is formed between the piston (18) and the canceller (28);
a through hole (46) which passes through the canceller (28) in the axial direction;
a normally open type valve mechanism (40) which is arranged in the through hole (46);
**characterized in that** when lubricating oil is supplied to the canceller chamber (34), a valve of the valve mechanism (40) is open, and when hydraulic oil is supplied to the canceller chamber (34), the valve of the valve mechanism (40) is closed.

2. The friction clutch (10) of claim 1, wherein the through hole (46) is provided on an inner diameter side from a center of a radial dimension between an inner peripheral edge and an outer peripheral edge of the canceller (28).

## Patentansprüche

1. Reibungskupplung (10), die Folgendes aufweist:
einen zylindrischen Kupplungskorb (12), der drehbar mit einem Keil (14) einer Innenumfangsfläche versehen ist;
eine Nabe (16), die koaxial mit dem Kupplungskorb (12) ist und an einer Innenumfangsseite des Kupplungskorbs (12) so vorgesehen ist, dass sie relativ drehbar ist;
einen Kolben (18), der an einer Innenumfangsseite des Kupplungskorbs (12) vorgesehen ist, um sich in einer axialen Richtung vorwärts und rückwärts zu bewegen;
eine Druckplatte (20), die mit dem Kolben (18) verbunden ist, die in den Keil (14) der Innenumfangsfläche gepasst ist und eine erste verjüngte Oberfläche (21) hat;
eine Endplatte (22), die in den Keil (14) der Innenumfangsfläche gepasst ist, und bewegbar in der axialen Richtung festgelegt ist und eine zweite verjüngte Oberfläche (23) hat;
einen Ausgabekegel (24), der mit der Nabe (16) verbunden ist, eine dritte verjüngte Oberfläche (25) hat, die durch Reibung mit der ersten verjüngten Oberfläche (21) in Eingriff ist, und eine vierte verjüngte Oberfläche (26), die durch Reibung mit der zweiten verjüngten Oberfläche (23) in Eingriff ist;
eine Hydraulikkammer (30), die zwischen dem Kupplungskorb (12) und dem Kolben (18) geformt ist;
einen Ausrücker (28), der an der gegenüberliegenden Seite der Hydraulikkammer (30) bezüglich des Kolbens (18) vorgesehen ist;
eine Ausrückerkammer (34), die zwischen dem Kolben (18) und dem Ausrücker (28) geformt ist;
ein Durchgangsloch (46), welches durch den Ausrücker (28) in der axialen Richtung verläuft;
einen Ventilmechanismus (40), der normalerweise offenen Bauart, der in dem Durchgangsloch (46) angeordnet ist;
**dadurch gekennzeichnet, dass**, wenn Schmieröl zu der Ausrückerkammer (34) geliefert wird, ein Ventil des Ventilmechanismus (40) offen ist, und wenn Hydrauliköl zu der Ausrückerkammer (34) geliefert wird, das Ventil des Ventilmechanismus (40) geschlossen ist.

2. Reibungskupplung (10) nach Anspruch 1, wobei das Durchgangsloch (46) an einer Innendurchmesserseite von einer Mitte einer radialen Abmessung zwischen einer Innenumfangskante und einer Außenumfangskante des Ausrückers (28) vorgesehen ist:

## Revendications

1. Embrayage à friction (10) comprenant ;
un tambour d'embrayage cylindrique (12) qui est pourvu de manière rotative d'une cannelure de surface périphérique intérieure (14) ;
un moyeu (16) qui est coaxial avec le tambour d'embrayage (12) et est prévu sur un côté périphérique intérieur du tambour d'embrayage (12) de manière à pouvoir tourner de manière relative ;
un piston (18) qui est prévu sur un côté périphérique intérieur du tambour d'embrayage (12) pour se déplacer vers l'avant et vers l'arrière dans une direction axiale ;
une plaque de poussée (20) qui est reliée au piston (18), montée dans la cannelure de surface périphérique intérieure (14), et a une première surface effilée (21) ;
une plaque d'extrémité (22) qui est montée dans la cannelure de surface périphérique intérieure (14), fixée de manière immobile dans la direction axiale, et a une deuxième surface effilée (23) ;
un cône de sortie (24) qui est relié au moyeu (16), a une troisième surface effilée (25) venant en prise par friction avec la première surface effilée (21) et une quatrième surface effilée (26) venant en prise par friction avec la deuxième surface effilée (23) ;
une chambre hydraulique (30) formée entre le tambour d'embrayage (12) et le piston (18) ;
un annulateur (28) qui est prévu sur le côté opposé de la chambre hydraulique (30) par rapport au piston (18) ;
une chambre d'annulateur (34) qui est formée entre le piston (18) et l'annulateur (28) ;
un trou traversant (46) qui traverse l'annulateur (28) dans la direction axiale ;
un mécanisme de soupape de type normalement ouvert (40) qui est agencé dans le trou traversant (46) ;
**caractérisé en ce que**, lorsque de l'huile de lubrification est fournie à la chambre d'annulateur (34), une soupape du mécanisme de soupape (40) est ouverte, et lorsque de l'huile hydraulique est fournie à la chambre d'annulateur (34), la soupape du mécanisme de soupape (40) est fermée.

2. Embrayage à friction (10) selon la revendication 1, dans lequel le trou traversant (46) est prévu sur un côté de diamètre intérieur par rapport à un centre d'une dimension radiale entre un bord périphérique intérieur et un bord périphérique extérieur de l'annulateur (28).
